# EUROPEAN PATENT SPECIFICATION

(11) **EP 3 077 666 B1**
(45) Date of publication and mention of the grant of the patent: **26.06.2019**
(21) Application number: 14805170.9
(22) Date of filing: 24.11.2014
(51) Int. Cl.: F03D 13/00, F03D 1/00

(54) **AN INTERNAL TOWER STRUCTURE FOR A WIND TURBINE GENERATOR**
INTERNE TURMSTRUKTUR FÜR EINEN WINDTURBINENGENERATOR
STRUCTURE DE TOUR INTERNE POUR UN AÉROGÉNÉRATEUR

(30) Priority: 27.11.2013 DK 201370722
(43) Date of publication of application: 12.10.2016
(73) Proprietor: Vestas Wind Systems A/S, 8200 Aarhus N (DK)
(72) Inventor: THERKILDSEN, Claus Hald, DK-8550 Ryomgård (DK)
(74) Representative: Vestas Patents Department
(86) International application number: PCT/DK2014/050398
(87) International publication number: WO 2015/078476

(56) References cited:
- EP-A1- 2 586 933
- WO-A1-2006/056196
- WO-A1-2013/080392
- DE-A1-102008 035 350
- US-A1- 2009 223 139
- US-A1- 2010 139 180

## Description

### Technical field

The invention relates in general to tower structures of wind turbine generator (WTGs) and, more particularly, to techniques for handling components within such tower structures.

### Background

Large, utility-scale horizontal-axis wind turbine generators (HAWTs) typically comprise a set of rotor blades mounted to a tower-like structure. In such HAWTs, the generating components including the gearbox, drive train, brake assembly and generator are located at the top of the tower in a nacelle behind the hub of the rotor blades.

In order to keep the mass of the nacelle comparatively low, it is usually preferable to locate electrical power modules, such as transformers, converters, inverters, switching and control equipment and the like for supplying electrical energy to the grid, near to the ground in a suitable structure. One option is to house the electrical power modules in a purpose-built building adjacent the base of the tower. However, WTG design has evolved such that it is now common for electrical power modules to be housed in a multi-storey structure within the tower itself. An example of such a structure is exemplified in US2007/0152449 A1, according to which two parts of a power module may be placed above one another by means of two mutually superposed supports. The mutually superposed supports are constructed in the manner of a frame and fit exactly one above the other. WO2006/056196 discloses a wind turbine wherein the tower includes more than one module, said more than one module each comprising a separate strengthening structure substantially defining outer edges of the module and wind turbine equipment, wherein said more than one module are positioned substantially vertically on top of each other in an upright position within said tower, and connected directly and/or indirectly through said strengthening structure, to said foundation. In aspects, one module could e.g. be pre- fitted with a personnel lift. In WO2013/080392, there is disclosed a wind turbine generator and a component transferring method for the same, which is capable of efficiently transferring a transfer-object component between an interior of the nacelle and an interior of the tower. The tower supports the nacelle via a yaw bearing and a component lifting and lowering mechanism is installed in the nacelle. The component lifting and lowering mechanism transfers the transfer-object component between the interior of the nacelle and the interior of the tower via a nacelle opening while suspending the transfer-object component from above the main shaft. The tower may comprise a plurality of floors, each of which floors may have a floor opening such that the floor openings overlap each other allowing a component lifting and lowering mechanism to vertically transfer objects in the tower. A component lifting and lowering mechanism may be installed in the nacelle. An additional component lifting and lowering mechanism may be installed in a space inside the tower at a tower internal floor above a transformer floor. DE102008035350 discloses a wind turbine generator with a tower comprised of several stacked, ring-shaped segments, a lower segment of which may comprise a transformer. The lower segment may include an opening large enough to allow passage of the transformer therethrough. A hoist, movable on a horizontal rail, may be provided for moving the transformer around in its tower segment.

Although such a configuration avoids the need to construct a building on-site that is specific to the task of housing electrical supply equipment, handling of the electrical equipment, for example for installation, maintenance or replacement of electrical modules, becomes a problem since free space inside the tower is limited.

One option is to locate a lifting appliance such as a crane or hoist in the nacelle so that items of equipment may be winched up through the inside of the tower. However, such a scheme can require excessive lengths of cable which increases the mass of the nacelle and also, possibly, its physical size which conflicts against the general design goal to minimise the mass at the top of the tower. It is against this background that the invention has been devised.

### Summary of the invention

In a first aspect, the invention provides an internal tower structure for a wind turbine generator, as defined in appended claim 1. Further preferred, optional features thereof are defined in appended subclaims 2-12.

One benefit of the invention is that a lifting facility for hoisting components to and from the internal tower structure does not need to be provided on the nacelle of the WTG. This avoids increasing the mass of the nacelle with lifting equipment. A further benefit of mounting a lifting apparatus directly onto the internal tower structure is that a hoisting facility for a tower of a WTG, in particular for components of a WTG such as power conversion components accommodated on platforms in a WTG can be set up in an off site location and installed into the tower in a single operation with the internal tower structure. The construction of the tower is thus made less complex and time consuming. Moreover, the lifting loads are transmitted into the internal tower structure itself rather than being borne by other parts of the tower structure that are not necessarily designed for bearing such loads and which may require considerable and costly additional reinforcement in order to accommodate a lifting apparatus.

Preferably, the platforms are supported by a plurality of support members of the support structure. Preferably, the support structure comprises elongated members which connect and support the platforms in a superposed arrangement. Preferably, the support structure comprises a plurality of upright support members is in the form of substantially vertical support pillars.

Although in principle the lifting apparatus could be mounted to selected support members of the internal tower structure, in one embodiment the lifting apparatus is mounted to one of the plurality of platforms.

To provide access to all of the platforms in the internal tower structure, the lifting apparatus may be mounted to an uppermost platform of the plurality of platforms.

The lifting apparatus may be in the form of a 'swing' or 'boom' crane, but in one embodiment, the lifting apparatus is a hoist that is mounted on an associated platform at a cross beam supported between first and second projecting members, in particular upright projecting members such as spars or pillar extensions. The lifting loads from the hoist are therefore transferred directly into the platform through the upright members.

In one embodiment, the first and second projecting members may be extensions of respective support members of the tower structure. The lifting loads borne by the hoist are therefore transferred directly into the main structural support members of the internal tower structure. Although the support structure may take on, for example, the form of a space frame, it is currently envisaged that the support members will take the form of substantially vertical pillars which provide a simple and cost effective structure for supporting the platforms.

Although the lifting apparatus may be arranged so that it operates over the side of the platforms in order to raise and lower components outside the footprint of the internal tower structure, in one embodiment the lifting apparatus may have a lifting line that extends through an aperture defined in the platform on or above which the lifting apparatus is mounted. The lifting line therefore operates within the footprint of the structure. To enable the lifting line to ascend and descend the height of the internal structure within its footprint, in one embodiment, the platforms together define a hoisting channel along which components are able to be raised within the footprint of the internal tower structure.

In another aspect, the invention resides in a tower for a wind turbine generator incorporating the internal tower structure as defined above. Although the internal tower structure may optionally be mounted and supported on a foundation of the tower, it may be optionally preferred that the internal tower structure is mounted on a region of the tower itself, for example on the tower wall or on a flange of the tower. The internal tower structure can be supported in a number of ways, for example at its upper end only. The tower incorporating an internal tower structure is defined in appended claim 13. Further optional features thereof are defined in appended claims 14 and 15.

### Brief description of the drawings

In order to provide a more complete understanding of the invention, reference will now be made, by way of example, to the following drawings in which:
Figure 1 is a schematic view of a horizontal-axis wind turbine generator;
Figure 2 is a perspective view illustrating the construction of a tower section and an associated equipment-bearing internal tower structure;
Figure 3 is a more detailed perspective view of an internal tower structure in accordance with an embodiment of the invention;
Figures 4, 5 and 6 are perspective views from three different angles, respectively, of an uppermost platform of the internal tower structure of Figure 4;
Figure 7 is a plan view that shows the outer profile of one of the platforms of the internal tower structure in Figures 4 to 6; and
Figures 8 and 9 are schematic views that show alternative configurations of lifting apparatus.

### Detailed description

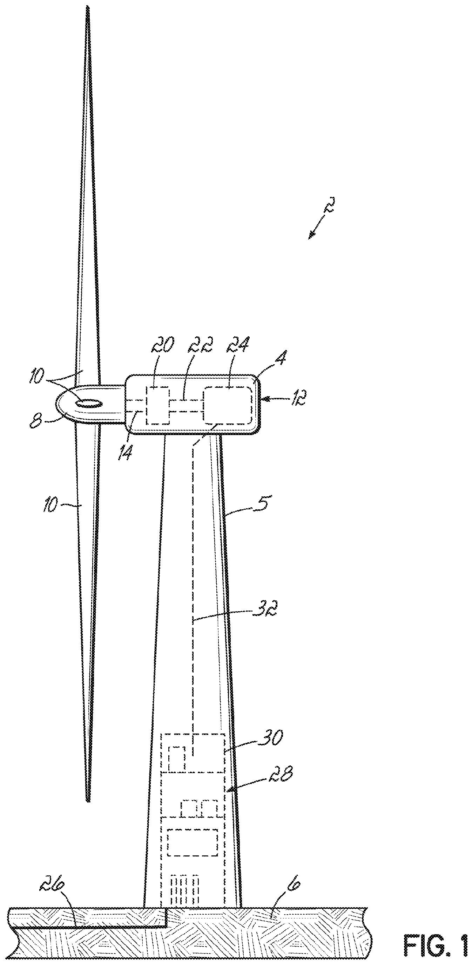

With reference to Figure 1, a wind turbine 2 of the horizontal-axis type (HAWT) comprises a nacelle 4 mounted on top of a tower 5 which is itself mounted on a foundation or footing 6. The nacelle 4 includes a hub 8 at its front end which carries a set of rotor blades 10. Three rotor blades 10 are shown in this embodiment, as is common in large utility-scale generators, although the skilled person will appreciated that other numbers of blades are applicable.

At this point it should be noted that Figure 1 is for illustrative purposes only and therefore is not to scale and is not intended to be a realistic representation of a wind turbine generator. Also it is to be noted that other tower constructions are known, for example towers defined by structural lattice framework.

To enable energy to be recovered from the rotating blades, the nacelle 4 houses a generator set 12, shown here in dashed lines, that is driven by the hub 8 through a low speed drive shaft 14. The generator set 12 is typical of a HAWT and includes a gearbox 20 which steps up the rotational speed of the low speed drive shaft 14 at a high speed output shaft 22 which is used to drive an electrical generator 24. The generator 24 outputs alternating current (AC) at a voltage and frequency that is determined largely by the rotational speed of the hub 8 as driven by the rotor blades 10.

To enable variable speed operation of the wind turbine generator, the alternating current output by the generator 24 is first converted, or 'rectified', to direct current (DC) and is then converted back into alternating current (or 'inverted') at the correct frequency and voltage in order to integrate with the frequency and voltage that is required from the national grid system via supply line 26. The process of rectification and inversion is handled by a power system 28 that is contained in an internal tower structure 30 to which the generator 24 is electrically connected by way of a high voltage AC current line 32.

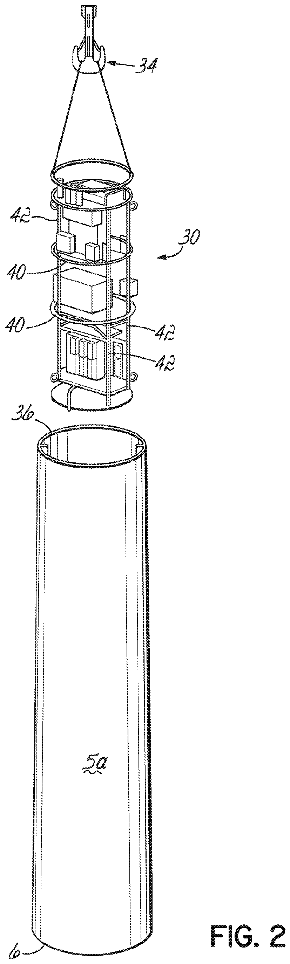

Figure 2 exemplifies how the internal tower structure 30 depicted in Figure 1 may be constructed. Here, a lower tower section 5a is already provided on-site attached to its foundation 6. To install the internal tower structure 30 into the lower tower section 5a, a lifting apparatus, shown generally as 34, hoists the internal tower structure 30 into the air and guides it into an upper opening 36 defined by the open top of the lower tower section 5a. It will be appreciated that the lifting apparatus 34 is depicted here as a cable attachment for lifting the internal tower structure 30 and that a suitable crane that provides the cable attachment is not shown but its present is implicit.

The internal tower structure 30 is guided down into the interior of the lower tower section 5a until it is at the base of the tower 5 in the position shown in Figure 1. Note that the internal tower structure 30 is securable to the foundation 6, as is shown here or, alternatively, it may be suspended on appropriate supports provided at the base of the lower tower section 5a.

A significant benefit of the internal tower structure 30 is that it enables all equipment items that are necessary for AC-DC-AC power transfer from the generator set 12 in the nacelle 4 to the national grid supply line 26 to be installed within the tower 5 in a single operation and in a single unit or module. The internal tower structure 30 may therefore incorporate various equipment items necessary for such a task, such as high voltage switching modules, converters, inverters, cooling packs and control electronics. The structure 30 may also carry storage compartments for maintenance equipment and the like, and even office space, walkways and staircases. For present purposes, all such equipment will be referred to generally as 'components'.

As is shown in Figure 2, internal tower structure 30 is configured in the form of a plurality of platforms 40, only two of which are shown, that are spaced apart in the longitudinal direction of the tower 5 and supported by a support structure comprising four support members in the form of substantially vertical pillars 42 that provide the internal tower structure 30 with a generally square or circular structural footprint.

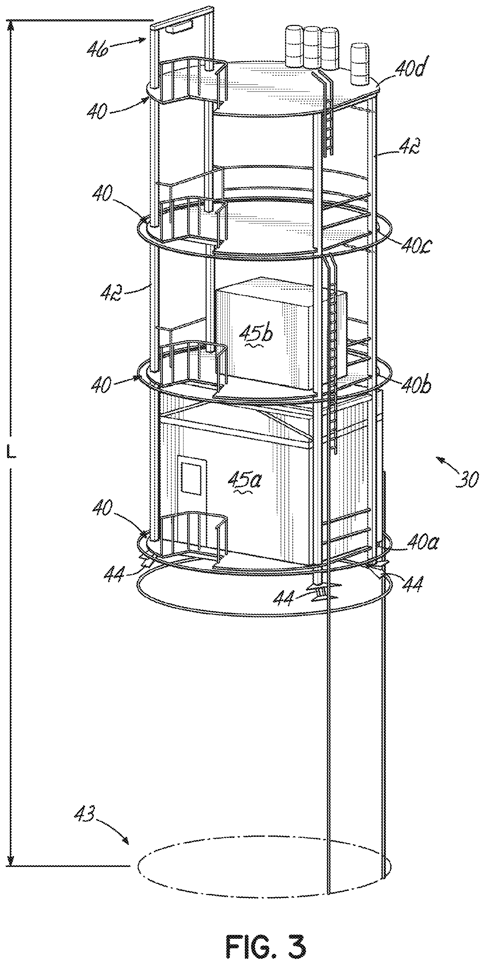

Whereas Figure 2 shows a rather generalised view of an internal tower structure 30, reference will now be made to Figures 3 to 7 which show a more practical embodiment of an internal tower structure 30 in accordance with the invention from various viewing perspectives. Note that the tower itself 5 is not shown explicitly in Figures 3 to 7 but should be considered present in the manner illustrated in Figure 2.

As shown in Figure 3, the internal tower structure 30 comprises a plurality of platforms 40 supported in a 'multi-storey' structure configuration connected by a set of four support members in the form of 'pillars' 42 which are spaced equally about the circumference of the platforms 40 so as to reside at the four corners of an imaginary square. In order to conform to the profile of a tower within which the internal tower structure 30 is installed, the platforms 40 have a circular outer profile so as to provide the structure with a generally circular footprint. Other platform profiles are of course acceptable.

The support structure may be supported at its base by the tower wall. In particular, the support structure may be supported by resting pillars on support flanges at the tower wall. As shown in Figure 3, base supports 44 are provided which couple respective ones of the pillars to the tower wall. The base supports 44 are located close to the lowermost one of the platforms, or 'base platform' 40a. Note that only three of the four base supports 44 are visible in Figure 3. Thus the 'base platform' 40a and all of the other platforms 40b are supported by the pillars 42. To give the platforms a size context, typically such platforms will be in the region of 4 to 7 metres in diameter for large wind turbines

Each of the platforms 40a-40d carry one or more components 45 that are related to the operation of the wind turbine, as has been mentioned above. By way of example, the base platform 40a bears a portable office 45a, and the platform above 40b carries electrical equipment 45b. In Figure 3, it should be noted that some generic blocks are illustrated here by reference numeral 45c but that these relate to volumes inside the tower structure where functional components may be installed and, as such, are not intended to represent specific components of the structure.

A lifting apparatus 46 may be mounted on or above a platform which may in particular be the upper most platform 40d so as to enable components to be hoisted from the base or 'foot' of the tower, shown generally as 43, to any one of the platforms 40a,40b,40c that are positioned below the lifting apparatus 46.

The lifting apparatus 46 in this embodiment takes the form of a hoist 50 that is mounted in a static position supported on the uppermost platform 40d. The hoist 50 is rigidly suspended from a cross member 52 in the form of an H-sectioned beam or joist that is supported at each one of its end by respective projecting members 54 which are upright and may be H-shaped in cross section. The projecting members 54 are positioned over floor joists 55 of the platform and so transfer their loading into the floor joists 55. In an alternative embodiment, not shown here, is for the upright projecting members 54 to be embodied by projecting extensions of the pillars 42 of the tower structure 30 which may define vertical spars so that the loading of the projecting members is transferred directly into the main structural supports thereby providing a robust and strong anchoring of the hoist 50.

The hoist 50 is powered by a suitable electrical power supply, for example a three-phase 50Hz supply voltage. Note that a power supply is not shown here for simplicity, but its presence is implicit.

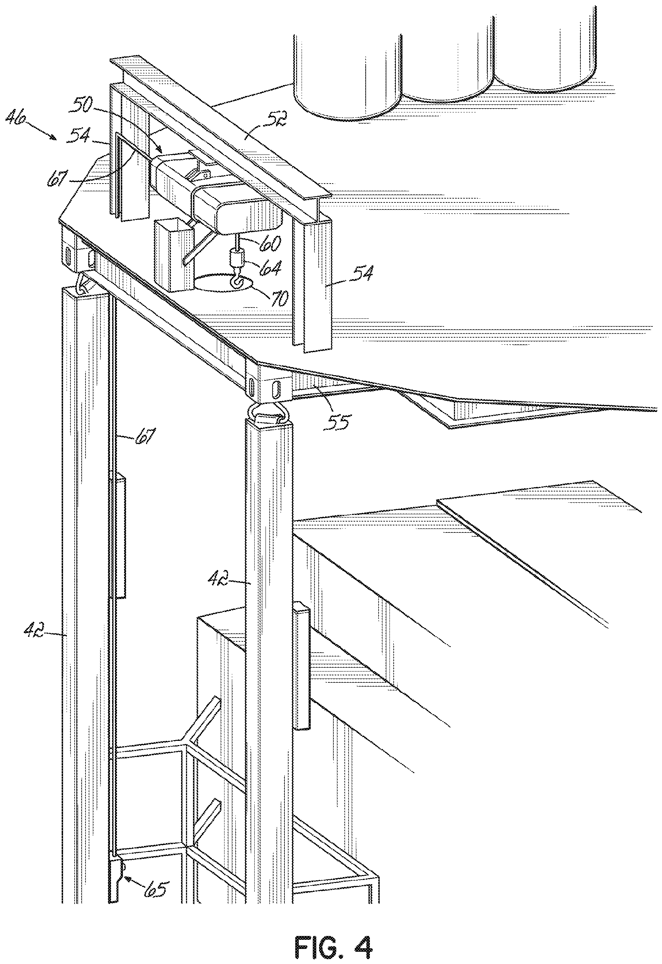

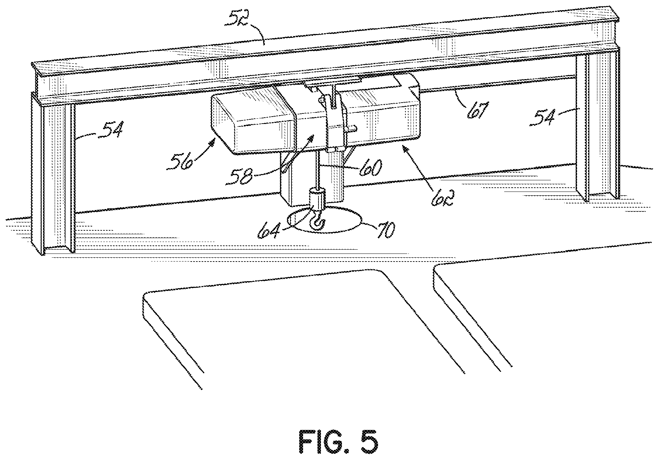

As shown most clearly in Figures 4 to 6, and particularly Figure 5, the hoist 50 comprises a hoist motor portion 56 that drives a central pulley section 58 that is able to spool in and out a cable or line 60 from a cable drum section 62. A hook device 64 is provided on the end of the cable 60 for attachment to components to be moved. A pendant control 65 is provided on the second platform 50c and is connected to the hoist by a control tether 67 to allow the hoist to be operated by suitably qualified personnel and further controls may be provided at other positions and on other ones of the platforms 40a, 40b, 40c. Preferably the hoist 50 has a lifting capacity of 1.5 metric tonnes and suitable hoists would be known to the skilled person.

The skilled person will also understand that other types of hoists may be used, such as powered chain hoists, or manual cable or chain hoists.

Although the hoist 50 is suspended from the underside of the cross member 52, here it is also supported by a pair of brace members 66 that extends diagonally from an upright post 68 extending from the platform 40d. This configuration provides the hoist 50 with a stronger mounting configuration since it is supported from above and below, although this should be understood as optional.

In order for the cable 60 to access the platforms 40 below it, the uppermost platform 40d is provided with an aperture 70 underneath the hoist 50 through which the cable 60 descends. As shown in Figure 3, the hoist 50 preferably has a sufficient length of cable to enable the hook device 64 to descend to the base 63 to the tower, which may be further than the base platform 40a, as can be seen here by the line referenced as 'L'.

This enables components to be hoisted up from the base of the tower to any of the platforms 40 of the internal tower structure 30.

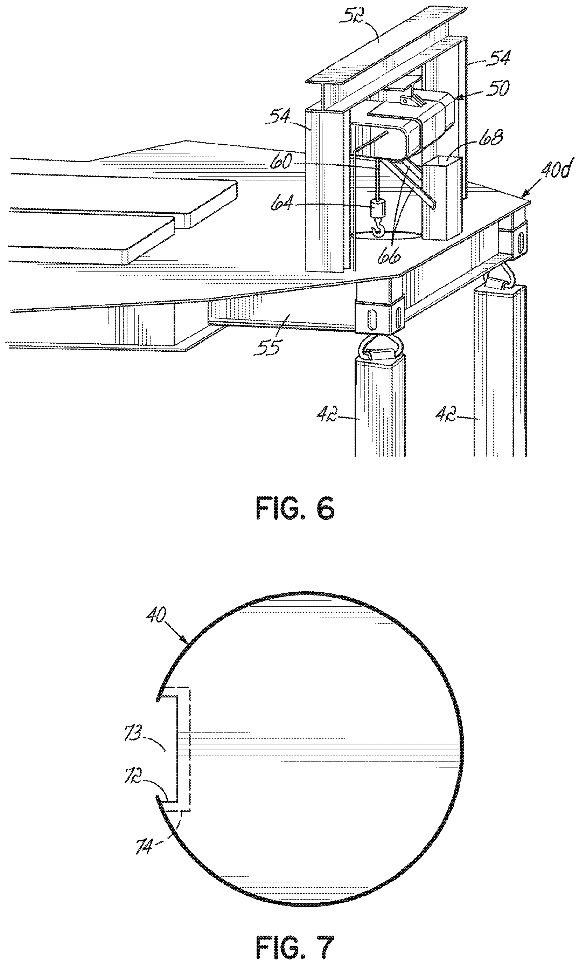

To enable components to be hoisted up past the platforms 40, each platform 40 is provided with a recess 72 that corresponds to the position of the aperture 70 in the uppermost platform 40d. Such a configuration is shown more clearly in Figure 7. Together, the recesses 72 provide a hoisting passage or channel 73 along which components can be hoisted from the base 63 of the tower to any one of the first three platforms 40a,40b,40c. It should be appreciated that although the recesses 72 are depicted here as generally rectangular cut-outs within the floor of the platform 40 having an open edge facing away from the platform, a similar provision could be realised by 'trapdoor'-type apertures provided in the platforms. In both configurations, it should be noted that the hoisting channel 73 enables components to travel along it within the footprint of the internal tower structure 30.

Each recess 72 is provided with a guard rail arrangement 74 as a safety measure. The guard rail arrangement 74 may have an openable door to allow components to be swung in to the platform 40 from the hoist channel provided by the recesses 72.

Mounting the lifting apparatus 46 directly onto the internal tower structure 30 enables a hoisting facility to be established for the structure 30 in an off-site location and which is then installed in the tower in a single operation during installation of the internal tower structure 30. Tower construction is therefore simplified.

An additional addition advantage is that mounting the lifting apparatus on the internal tower structure 30 avoids any additional loads being applied to the skin of the tower, as would be the case if a lifting apparatus were to be mounted to the internal surface of the tower, or to a tower flange.

Some variations on the specific embodiment have been described above. Others will now be explained below.

In the embodiments described above, the pillars 42 are substantially vertical and this provides a simple support structure for the platforms. However, it should be noted that the support structure could be configured in alternative ways, for example in the form of a 'space frame' comprising a plurality of interlocking struts arranged in a geometrical pattern. The 'supporting members' should therefore be interpreted to include any structural members or elements that are configured in such as way so as to space apart and support the platforms form one another.

As an alternative to the statically mounted hoist 50, it should be appreciated that the lifting apparatus 46 may be embodied as a boom crane. As such, the free end of the boom could be manoeuvred over the side of the uppermost platform 40d in order to run the cable 60 down the outside edges of the platforms 40.

Although the lifting apparatus 46 has been described as mounted on the uppermost platform 40d, it should be appreciated that this is simply the configuration that is currently envisaged since it offers access to the greatest number of platforms. However, other positions for the hoist 50 could be selected. For example, the lifting apparatus 46 could, in principle, be mounted on any one of the platforms or even on more than one platform. Furthermore, the lifting apparatus 46 may be embodied by multiple hoists/cranes mounted on any of the platforms.

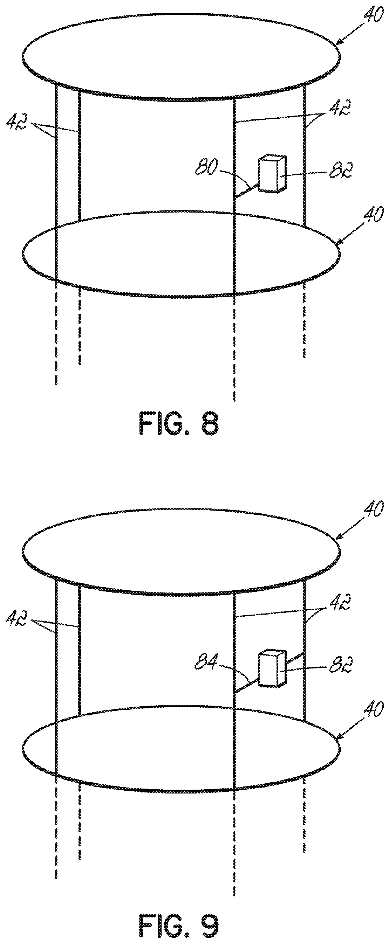

In the above embodiment, the lifting apparatus 46 is mounted directly onto the platform, and specifically the uppermost platform. However, it is also feasible that the lifting apparatus 46 could be mounted onto or integrated into one or more of the vertical pillars 42. As an example of a way in which this could be achieved, it is envisaged that a horizontal brace 80 could be cantilevered from one of the vertical pillars 42 and configured to bear a suitable hoist/winch/crane 82, as is shown schematically in Figure 8. Alternatively, a bridge member 84 could be connected between a pair of horizontal pillars 42 and the bridge 84 could carry a suitable hoist/winch/crane 86, as is shown schematically in Figure 9. Also, it should be noted that multiple lifting devices may be mounted to the internal tower structure in any of the configurations referred to above.

## Claims

1. An internal tower structure (30) for a wind turbine generator (2), the internal tower structure (30) comprising a plurality of superposed platforms (40) on a support structure, the support structure comprising a plurality of support members (42) in the form of substantially vertical support pillars, the internal tower structure (30) being separate from a tower (5) of a wind turbine generator (2), **characterised in that** the support structure connects the plurality of platforms (40) such that the internal tower structure (30) is capable of being supported at its upper end only and installable within a tower of a wind turbine generator as a single unit and in a single lifting operation, and
wherein a lifting apparatus (46) is mounted on the internal tower structure (30) at an uppermost platform (40) of the plurality of platforms (40), to enable components (45) to be lifted to and from the platforms (40).

2. The internal tower structure (30) of claim 1, wherein the lifting apparatus (46) is mounted to one or more of the plurality of support members (42).

3. The internal tower structure (30) of claim 2, wherein the lifting apparatus (46) is mounted by a cantilever arrangement extending from one of the plurality of support members (42).

4. The internal tower structure (30) of claim 2, wherein the lifting apparatus (46) is mounted to a bridge member (84) connected between two of the plurality of support members (42).

5. The internal tower structure (30) of claim 1, wherein the lifting apparatus (46) is mounted to one of the plurality of platforms (40).

6. The internal tower structure (30) of claim 5, wherein the lifting apparatus (46) is carried by a cross member (52) mounted between first and second projecting members (54) which extend above an associated platform (40).

7. The internal tower structure (30) of claim 6, wherein the first and second projecting members (54) are extensions of a respective one of the plurality of support members (42).

8. The internal tower structure (30) of any of claims 6-7, wherein the lifting apparatus (46) is further braced from below against an associated platform (40).

9. The internal tower structure (30) of any of the preceding claims, wherein the platforms (40) define a hoisting channel (73) along which components are able to be raised within a footprint of the internal tower structure (30).

10. The internal tower structure (30) of claim 9, when dependent on claims 4 to 6, wherein the lifting apparatus (46) has a lifting line (60) that extends through an aperture (70) in the platform (40) on which the lifting apparatus (46) is mounted.

11. The internal tower structure (30) of any of the preceding claims, wherein the lifting apparatus (46) is a hoist (50) or a crane.

12. The internal tower structure (30) of any of the preceding claims, wherein said internal tower structure (30) comprises a base platform (40a), wherein said base platform (40a) and all other platforms (40b) are supported by said pillars (42).

13. A tower (5) of a wind turbine generator, the tower including the internal tower structure (30) of any of claims 1 to 12.

14. The tower (5) of claim 13, wherein the internal tower structure (30) is mounted on a foundation of the tower (5).

15. The tower (5) of claim 13, wherein the internal tower structure (30) is mounted to a region of the tower (5).

## Patentansprüche

1. Interne Turmstruktur (30) für eine Windkraftanlage (2), die interne Turmstruktur (30) umfassend eine Vielzahl von aufgesetzten Plattformen (40) auf einer Trägerstruktur, die Trägerstruktur umfassend eine Vielzahl von Trägerelementen (42) in der Form im Wesentlichen vertikaler Stützsäulen, wobei die interne Turmstruktur (30) von einem Turm (5) einer Windkraftanlage (2) getrennt ist, **dadurch gekennzeichnet, dass** die Trägerstruktur die Vielzahl von Plattformen (40) verbindet, sodass die interne Turmstruktur (30) nur an ihrem oberen Ende gestützt werden kann und innerhalb eines Turms einer Windkraftanlage als eine einzelne Einheit und in einem einzelnen Hebebetrieb installiert werden kann, und
wobei eine Hebevorrichtung (46) auf der internen Turmstruktur (30) bei einer obersten Plattform (40) der Vielzahl von Plattformen (40) montiert ist, um zu ermöglichen, dass Komponenten (45) auf die und von den Plattformen (40) gehoben werden.

2. Interne Turmstruktur (30) nach Anspruch 1, wobei die Hebevorrichtung (46) an einem oder mehr der Vielzahl von Trägerelementen (42) montiert ist.

3. Interne Turmstruktur (30) nach Anspruch 2, wobei die Hebevorrichtung (46) durch eine freitragende Anordnung montiert ist, die sich von einem der Vielzahl von Trägerelementen (42) erstreckt.

4. Interne Turmstruktur (30) nach Anspruch 2, wobei die Hebevorrichtung (46) an einem Brückenelement (84) montiert ist, das zwischen zwei der Vielzahl von Trägerelementen (42) verbunden ist.

5. Interne Turmstruktur (30) nach Anspruch 1, wobei die Hebevorrichtung (46) an einer der Vielzahl von Plattformen (40) montiert ist.

6. Interne Turmstruktur (30) nach Anspruch 5, wobei die Hebevorrichtung (46) von einem Querelement (52) getragen wird, das zwischen ersten und zweiten Fortsatzelementen (54) montiert ist, die sich über eine zugehörige Plattform (40) erstrecken.

7. Interne Turmstruktur (30) nach Anspruch 6, wobei die ersten und zweiten Fortsatzelemente (54) Verlängerungen eines jeweiligen der Vielzahl von Trägerelementen (42) sind.

8. Interne Turmstruktur (30) nach einem der Ansprüche 6-7, wobei die Hebevorrichtung (46) weiter von unterhalb gegen eine zugehörige Plattform (40) verspannt ist.

9. Interne Turmstruktur (30) nach einem der vorstehenden Ansprüche, wobei die Plattformen (40) einen Hubkanal (73) definieren, entlang dem Komponenten innerhalb eines Fußabdrucks der internen Turmstruktur (30) angehoben werden können.

10. Interne Turmstruktur (30) nach Anspruch 9, wenn abhängig von Ansprüchen 4 bis 6, wobei die Hebevorrichtung (46) ein Hebeseil (60) hat, das sich durch eine Öffnung (70) in der Plattform (40) erstreckt, an dem die Hebevorrichtung (46) montiert ist.

11. Interne Turmstruktur (30) nach einem der vorstehenden Ansprüche, wobei die Hebevorrichtung (46) ein Hebezeug (50) oder ein Kran ist.

12. Interne Turmstruktur (30) nach einem der vorstehenden Ansprüche, wobei die interne Turmstruktur (30) eine Basisplattform (40a) umfasst, wobei die Basisplattform (40a) und alle anderen Plattformen (40b) durch die Säulen (42) gestützt werden.

13. Turm (5) einer Windkraftanlage, der Turm enthaltend die interne Turmstruktur (30) nach einem der Ansprüche 1 bis 12.

14. Turm (5) nach Anspruch 13, wobei die interne Turmstruktur (30) auf einem Fundament des Turms (5) montiert ist.

15. Turm (5) nach Anspruch 13, wobei die interne Turmstruktur (30) an einem Bereich des Turms (5) montiert ist.

## Revendications

1. Structure interne de mât (30) pour un générateur éolien (2), la structure interne de mât (30) comprenant une pluralité de plates-formes superposées (40) sur une structure de support, la structure de support comprenant une pluralité d'éléments de support (42) sous la forme de piliers de support sensiblement verticaux, la structure interne de mât (30) étant distincte d'un mât (5) d'un générateur éolien (2), **caractérisé en ce que** la structure de support relie la pluralité de plates-formes (40) de sorte que la structure interne de mât (30) est susceptible d'être supportée au niveau de son extrémité supérieure seulement et peut être installée à l'intérieur d'un mât d'un générateur éolien en tant qu'unité simple et en une unique opération de levage, et
dans laquelle un appareil de levage (46) est monté sur la structure interne de mât (30) au niveau d'une plate-forme supérieure (40) de la pluralité de plates-formes (40), pour permettre à des composants (45) d'être élevés jusqu'aux et depuis les plates-formes (40).

2. Structure interne de mât (30) selon la revendication 1, dans laquelle l'appareil de levage (46) est monté sur un ou plusieurs de la pluralité d'éléments de support (42).

3. Structure interne de mât (30) selon la revendication 2, dans laquelle l'appareil de levage (46) est monté par un agencement en porte-à-faux s'étendant depuis l'un de la pluralité d'éléments de support (42).

4. Structure interne de mât (30) selon la revendication 2, dans laquelle l'appareil de levage (46) est monté sur un élément formant pont (84) relié entre deux de la pluralité d'éléments de support (42).

5. Structure interne de mât (30) selon la revendication 1, dans laquelle l'appareil de levage (46) est monté sur une de la pluralité de plates-formes (40).

6. Structure interne de mât (30) selon la revendication 5, dans laquelle l'appareil de levage (46) est porté par un élément transversal (52) monté entre des premier et second éléments en saillie (54) qui s'étendent au-dessus d'une plate-forme associée (40).

7. Structure interne de mât (30) selon la revendication 6, dans laquelle les premier et second éléments en saillie (54) sont des extensions d'un élément respectif de la pluralité d'éléments de support (42).

8. Structure interne de mât (30) selon l'une quelconque des revendications 6-7, dans laquelle l'appareil de levage (46) est en outre renforcé par le dessous contre une plate-forme associée (40).

9. Structure interne de mât (30) selon l'une quelconque des revendications précédentes, dans laquelle les plates-formes (40) définissent un canal de levage (73) le long duquel des composants sont susceptibles d'être élevés à l'intérieur d'une place occupée par la structure interne de mât (30).

10. Structure interne de mât (30) selon la revendication 9, lorsque dépendante des revendications 4 à 6, dans laquelle l'appareil de levage (46) a une ligne de levage (60) qui s'étend à travers une ouverture (70) dans la plate-forme (40) sur laquelle l'appareil de levage (46) est monté.

11. Structure interne de mât (30) selon l'une quelconque des revendications précédentes, dans laquelle l'appareil de levage (46) est un palan (50) ou une grue.

12. Structure interne de mât (30) selon l'une quelconque des revendications précédentes, dans laquelle ladite structure interne de mât (30) comprend une plate-forme de base (40a), dans laquelle ladite plate-forme de base (40a) et toutes les autres plates-formes (40b) sont supportées par lesdits piliers (42).

13. Mât (5) d'un générateur éolien, le mât incluant la structure interne de mât (30) selon l'une quelconque des revendications 1 à 12.

14. Mât (5) selon la revendication 13, dans lequel la structure interne de mât (30) est montée sur une fondation du mât (5).

15. Mât (5) selon la revendication 13, dans lequel la structure interne de mât (30) est montée sur une région du mât (5).
